# EUROPÄISCHE PATENTSCHRIFT

(11) **EP 1 055 680 B1**
(45) Veröffentlichungstag und Bekanntmachung des Hinweises auf die Patenterteilung: **21.05.2003**
(21) Anmeldenummer: 00109546.2
(22) Anmeldetag: 04.05.2000
(51) Int. Cl.: C07F 9/48

(54) **Verfahren zur Herstellung von (Metall)Salzen von Alkylphosphonigen Säuren**
Process for the preparation of (metal)salts of alkylphosphonous acids
Procédé pour la préparation de sels (métalliques) d'acides alkyl phosphoneux

(30) Priorität: 25.05.1999 DE 19923830
(43) Veröffentlichungstag der Anmeldung: 29.11.2000
(73) Patentinhaber: Clariant GmbH, 65929 Frankfurt am Main (DE)
(72) Erfinder: Weferling, Norbert, Dr., 50354 Hürth (DE); Sicken, Martin, Dr., 51149 Köln (DE)

(56) Entgegenhaltungen:
- WO-A-99/28326
- JP-A- 58 150 502
- SEMENZIN D.: "Alkylation of phosphine PH3 generated from red phosphorus" TETRAHEDRON LETTERS., Bd. 35, Nr. 20, - 16. Mai 1994 (1994-05-16) Seiten 3297-3300, XP002145960 ELSEVIER SCIENCE PUBLISHERS, AMSTERDAM., NL ISSN: 0040-4039
- TROFIMOV B ET AL: "Generation of phosphide anions from phosphorus red and phosphine in strongly basic systems to form organophosphines and -oxides" PHOSPHORUS, SULFUR SILICON RELAT. ELEM. (PSSLEC,10426507);1996; VOL.109-110 (1-4, PROCEEDINGS OF THE THIRTEENTH INTERNATIONAL CONFERENCE ON PHOSPHORUS CHEMISTRY, 1995); PP.601-604, XP000938730 Russian Acad. Scis.;Inst. Organic Chem.; Irkutsk; 664033; Russia (RU)
- TROFIMOV B A ET AL: "Superbase-induced generation of phosphide and phosphinite ions as applied in organic synthesis" PHOSPHORUS, SULFUR SILICON RELAT. ELEM. (PSSLEC,10426507);1991; VOL.55 (1-4); PP.271-4, XP000938581 Irkutsk Inst. Org. Chem.;Irkutsk; 664033; USSR (SU)
- ALBRECHT S ET AL: "The reaction properties of the tetraphosphorus molecule. The direct synthesis of organophosphorus compounds" PRAX. NATURWISS., CHEM. (PXNCAP,03428737);1992; VOL.41 (1); PP.12-16, XP000861829 Med. Akad. "Carl Gustav Carus";Inst. Klin. Chem. Laboratoriumsdiagn.; Dresden; O-8019; Germany (DE)

## Beschreibung

Die Erfindung betrifft ein Verfahren zur Herstellung von (Metall)salzen von Alkylphosphonigen Säuren sowie die Verwendung der nach diesem Verfahren hergestellten (Metall)-salze von Alkylphosphonigen Säuren.

Organische Phosphorverbindungen gewinnen zunehmend an technischer Bedeutung. Sie werden hauptsächlich zur Herstellung von Herbiziden oder als Herbizid selbst, als Extraktionsmittel und als Flammschutzmittel eingesetzt. Als Ausgangsmaterialien werden bevorzugt PH₃ und Phosphorhalogenide verwendet, die ihrerseits wiederum aus gelbem Phosphor hergestellt werden müssen.

Bisher sind nur wenige Verfahren bekannt, mit denen sich organische Phosphorverbindungen mit mehr als einer Phosphor-Kohlenstoff-Bindung aus einfachen Ausgangsmaterialien herstellen lassen.

Die Umsetzung von rotem Phosphor im superbasischen Medium Dimethylsulfoxid/-Kaliumhydroxid (DMSO/KOH) mit Acetylenen oder Olefinen als Alkylienmgsmittel (Trofimov et al., Phosphorus, Sulfur and Silicon 55, 271 ,1991) liefert bevorzugt Triorganylphosphane und -oxide.

Die Alkylierung von rotem Phosphor mit Acrylnitril führt unter den vorgenannten Bedingungen bei Ultrabeschallung des Reaktionsgemisches vorwiegend zu sekundärem Phosphanoxid. Wird 1,1-Diphenylethylen eingesetzt, erhält man dabei tert. Phosphanoxid (30%), sek. Phosphanoxid (10 %) und Phosphinsäure (35 %) [D. Semenzin et al., Tetrahedron Letters 35, 3297, 1994].

Die Direktsynthese phosphororganischer Verbindungen, ausgehend vom roten oder gelben Phophor, ist ausführlich untersucht worden (S. Albrecht et al., "Zum Reaktionsverhalten des P₄-Moleküls", Praxis der Naturwissenschaften, Chemie, Vol. 41 (1992), S. 12 bis 16). Beschrieben wird dort u.a. die Umsetzung von elementarem Phosphor mit Alkylhalogeniden und Alkalihydroxiden, wobei allerdings ein nur schwer auftrennbares Gemisch verschiedener Verbindungen entsteht.

Ein Verfahren zur Herstellung von Alkali-/Erdalkalisalzen von Alkylphosphonigen Säuren und Dialkylphosphinsäuren durch Umsetzung von elementarem Phosphor mit Alkylhalogeniden in Gegenwart von (Erd-)Alkalihydroxiden wird in der PCT/WO 99/28326 A1 beschrieben.

Nach der JP-A-58-150 502 werden Metallsalze der Methylphosphonigen Säure durch Umsetzung der Methylphosphonigen Säure selbst mit einer (an)organischen Base in einem geeignetem Lösungsmittel erhalten. Nachteilig ist hierbei, dass zunächst erstmal die Methylphosphonige Säure selbst hergestellt werden muß.

Auch ist versucht worden (Trofimov et al., Main Group Chem. News 4, 18, 1996, Phosphorus, Sulfur and Silicon, 109/110, 601, 1996), elementaren Phosphor in seiner roten Modifikation mit Alkylhalogeniden in Anwesenheit von Kaliumhydroxid, Wasser, Dioxan und einem Phasen-Transfer-Katalysator umzusetzen. Als Hauptprodukt wurden tert. Phosphanoxide gefunden (bis zu 75 % bei Benzylbromid, etwa 60 - 65 % bei Butylbromid). Als Nebenprodukte werden sek. Phosphanoxide und Phosphinsäureester mit 19 % bzw. 6 % erhalten, erstere aber nur in Anwesenheit von Zinkpulver als reduzierendem Agens.

Die vorgenannten Verfahren weisen jedoch den Nachteil auf, daß zunächst erst einmal der rote Phosphor oder aber Phosphororganische Zwischenprodukte hergestellt werden müssen. Diese Verfahren sind technisch sehr aufwendig und somit auch nicht wirtschaftlich, die erzeugten Produkte müssen oft mühsam nachgereinigt werden. Gerade die gezielte Herstellung bestimmter Verbindungen in hoher Ausbeute ist oftmals besonders schwierig.

Auch scheiden eine Reihe von Edukten, wie halogenhaltige Phosphorverbindungen oder Phosphine aufgrund ihr Umweltgefährlichkeit von vornherein für ein großtechnisches und wirtschaftliches Verfahren aus.

Es besteht daher ein Bedarf an Verfahren zur Herstellung von (Metall)salzen von Alkylphosphonigen Säuren, welches auf einfache Art und Weise durchführbar ist und bei dem einheitliche Produkte in hoher Ausbeute erhalten werden. Auch sollte ein solches Verfahren den bisher bekannten wirtschaftlich und umwelttechnisch deutlich überlegen sein.

Der Erfindung liegt daher die Aufgabe zugrunde, ein Verfahren zur Herstellung von (Metall)salzen von Alkylphosphonigen Säuren zur Verfügung zu stellen, das die vorgenannten Nachteile vermeidet und mit dem sich die gewünschten Endprodukte problemlos herstellen lassen.

Diese Aufgabe wird gelöst durch ein Verfahren der eingangs beschriebenen Art, dadurch gekennzeichnet, daß man elementaren gelben Phosphor mit halogenfreien Alkylierungsmitteln in Gegenwart mindestens einer Base umsetzt.

Bevorzugt wird die Reaktion in einem Zwei-Phasen-System aus mindestens einer Base und einem organischen Lösungsmittel durchgeführt.

Bevorzugt handelt es sich bei den Alkylierungsmitteln um Dialkylsulfate, Trialkylphosphate, Dialkylcarbonate und/oder um Ameisensäureorthoester. Besonders geeignet ist Dimethylsulfat.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt.

Besonders bevorzugt wird als organisches Lösungsmittel Toluol, allein oder in Kombination mit Alkoholen, eingesetzt.

Bevorzugt handelt es sich bei den Basen um Hydroxide, Carbonate, Bicarbonate, Amide, Alkoholate und/oder Aminbasen. Besonders geeignet sind dabei die wäßrigen Alkylhydroxide.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis +60 °C.

Besonders bevorzugt beträgt die Temperatur 0 bis 30 °C.

Bevorzugt wird die Reaktion unter einem Druck von 0 bis 10 bar durchgeführt.

Bevorzugt wird das erfindungsgemäße Verfahren so ausgeführt, daß man den gelben Phosphor in einem Lösungsmittel oder einem Lösungsmittelgemisch suspendiert oder löst und dann mit einem halogenfreien Alkylierungsmittel und mindestens einer Base umsetzt.

Bevorzugt werden der gelbe Phosphor und das halogenfreie Alkylierungsmittel im molaren Verhältnis von 1:1 bis 1:3 miteinander umgesetzt, wobei das molare Verhältnis von gelbem Phosphor zur Base 1:1 bis 1:5 beträgt.

Bevorzugt wird das nach der Umsetzung erhaltene Zwei-Phasen-System separiert und als wäßrige Phase weiterverarbeitet.

Die Erfindung betrifft auch die Verwendung der erfindungsgemäß hergestellten (Metall)-salze von Alkylphosphonigen Säuren als Vorprodukte zur chemischen Synthese.

Die Erfindung betrifft auch die Verwendung der erfindungsgemäß hergestellten (Metall)-salze von Alkylphosphonigen Säuren zur Herstellung von phosphororganischen Verbindungen.

Die Erfindung betrifft auch die Verwendung der erfindungsgemäß hergestellten (Metall)-salze von Alkylphosphonigen Säuren als Flammschutzmittel oder zur Herstellung von Flammschutzmitteln.

Die Erfindung betrifft insbesondere die Verwendung der erfindungsgemäß hergestellten (Metall)-salze von Alkylphosphonigen Säuren zur Herstellung von Flammschutzmitteln für thermoplastische Polymere wie Polyethylenterephthalat, Polybutylenterephthalat oder Polyamid.

Die Erfindung betrifft insbesondere die Verwendung der erfindungsgemäß hergestellten (Metall)-salze von Alkylphosphonigen Säuren zur Herstellung von Flammschutzmitteln für duroplastische Harze wie ungesättigte Polyesterharze, Epoxidharze, Polyurethane oder Acrylate.

Überraschenderweise wurde gefunden, daß sich elementarer gelber Phosphor nach dem erfindungsgemäßen Verfahren mit Alkylierungsmitteln im Zweiphasensystem (organisches Lösungsmittel/Base) und ggf. in Anwesenheit eines (Phasen-Transfer-)Katalysators unter äußerst milden Bedingungen zum (Metall)salz der entsprechenden Alkylphosphonigen Säure RP(:O)HOH umsetzen läßt.

Daneben können geringe Mengen an Dialkylphosphinsäuren, Trialkylphosphanoxid R₃P(:O), Dialkylphosphanoxid und nicht identifizierte Phosphorverbindungen entstehen, die auf übliche Weise aus dem Produktgemisch entfernt werden. Als Nebenprodukt entsteht ferner Wasserstoff, der problemlos aus dem Reaktionsgemisch abgetrennt werden kann. Die vorgenannten Dialkylphosphinsäuren lassen sich aus dem Reaktionsgemisch abtrennen und können andersweitig eingesetzt oder weiterverarbeitet werden.

Überraschenderweise entstehen nach dem erfindungsgemäßen Verfahren weder Phosphin (PH₃) noch Alkylphosphane (RPH₂, R₂PH) in nennenswerten Mengen. Durch Wahl geeigneter Reaktionsbedingungen - wie dem Hinzufügen geringer Anteile von Alkoholen zur organischen. Phase - wird die Bildung sämtlicher nicht identifizierter phosphorhaltiger Nebenprodukte zugunsten des Hauptprodukts, den (Metall)salzen der Alkylphosphonige Säure, auf ein überraschend geringes Maß von wenigen Mol% des eingesetzten gelben Phosphors minimiert.

Das erfindungsgemäße Verfahren kann beispielsweise so ausgeführt werden, daß man das Lösungsmittel zusammen mit dem Phasen-Transfer-Katalysator vorlegt und ggf. über den Schmelzpunkt des gelben Phosphors hinaus erwärmt, dann den elementaren (gelben) Phosphor zufügt, das Gemisch unter starkem Rühren auf Temperaturen von beispielsweise -10 bis +30 °C abkühlt und anschließend das Alkylierungsmittel zufügt.

Die Reaktion wird durch Zugabe der Base gestartet. Nach Beendigung der Reaktion kann das Reaktionssystem beispielsweise mit Wasser verdünnt werden und anschließend werden die leichtflüchtigen Anteile (H₂, PH₃, RPH₂, R₂PH und überschüssiges Alkylierungsmittel etc.) entfernt.

Man erhält hiernach ein basenhaltiges/organisches Zwei-Phasen-System, dessen Phasen getrennt werden. Die Inhaltsstoffe aus den Phasen werden analytisch bestimmt.

Die basenhaltige Phase kann nach den bekannten Verfahren des Standes der Technik aufgearbeitet werden, um die reinen Säuren, wie beispielsweise Alkylphosphonige Säure zu gewinnen (etwa durch Ionenaustausch oder Destillation).

Die Reaktionspartner können auch in anderer Reihenfolge zusammengegeben werden, beispielsweise dadurch, daß man diese kontinuierlich in dem oben definierten Molverhältnis in einen Reaktor (Druckrohr, Druckreaktor oder Kaskade) einträgt und nach Verweilzeiten von 0,5 bis 2 h aus dem Reaktor wieder ausschleust. Die nach der Phasentrennung erhaltene organische Phase, die noch die Hauptmenge des ggf. eingesetzten Phasen-Transfer-Katalysators enthält, wird zweckmäßigerweise recyclisiert.

### Beispiel 1: Methylphosphonige Säure

In einem 5 L Edelstahl-Druckreaktor wurde eine Lösung von 52,2 (0.1 Mol) Tributylhexadecylphosphoniumbromid in 1000 mL Toluol vorgelegt und auf 60 °C vorgeheizt. Nach Zugabe von 62 g (2 Mol) gelbem Phosphor wurde unter intensivem Rühren auf -10 °C abgekühlt und dann 252 g (2 Mol) Dimethylsulfat zudosiert. Danach wurde auf 20 °C erwärmt und innerhalb von 4 Stunden 500 g 40%ige wässrige Natronlauge zudosiert, wobei die Temperatur auf 20 °C gehalten wurde. Innerhalb einer weiteren Stunde wurde 300 g Wasser zugegeben, danach eine weitere Stunde nachgerührt und anschließend der Reaktor über eine Verbrennung entspannt. Man erhielt zwei homogene flüssige Phasen, die getrennt und analysiert wurden.
Die wäßrige Phase (Auswaage: 930 g) enthielt 54,6 Mol% Methylphosphonige Säure, 17,9 Mol% Phosphorige Säure, 19,7 Mol% Hypophosphorige Säure, 2,8 Mol% Dimethylphosphinsäure in Form ihrer Natriumsalze sowie 3 Mol% Dimethyldiphosphin.

Aus den im Beispiel 1 hergestellten Salze lassen sich in bekannter Weise die Säuren, beispielsweise durch Ionenaustausch darstellen.

## Patentansprüche

1. Verfahren zur Herstellung von Metallsalzen von Alkylphosphonigen Säuren, **dadurch gekennzeichnet, daß** man elementaren gelben Phosphor mit halogenfreien Alkylierungsmitteln in Gegenwart mindestens einer Base umsetzt.

2. Verfahren nach Anspruch 1, **dadurch gekennzeichnet, daß** die Reaktion in einem Zwei-Phasen-System aus mindestens einer Base und einem organischen Lösungsmittel durchgeführt wird.

3. Verfahren nach Anspruch 1 oder 2, **dadurch gekennzeichnet, daß** es sich bei den A1-kylierungsmitteln um Dialkylsulfate, Trialkylphosphate, Dialkylcarbonate und/oder um Ameisensäureorthoester handelt.

4. Verfahren nach einem oder mehreren der Ansprüche 1 bis 3, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt werden.

5. Verfahren nach einem oder mehreren der Ansprüche 1 bis 4, **dadurch gekennzeichnet, daß** als organisches Lösungsmittel Toluol, allein oder in Kombination mit Alkoholen, eingesetzt wird.

6. Verfahren nach einem oder mehreren der Ansprüche 1 bis 5, **dadurch gekennzeichnet, daß** es sich bei den Basen um Hydroxide, Carbonate, Bicarbonate, Amide, Alkoholate und/oder Aminbasen handelt.

7. Verfahren nach einem oder mehreren der Ansprüche 1 bis 6, **dadurch gekennzeichnet, daß** die Reaktion in Anwesenheit eines Phasen-Transfer-Katalysators durchgeführt wird.

8. Verfahren nach Anspruch 7, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

9. Verfahren nach einem oder mehreren der Ansprüche 1 bis 8, **dadurch gekennzeichnet, daß** die Temperatur bei der Reaktion -20 bis +60 °C beträgt.

10. Verfahren nach einem oder mehreren der Anspruche 1 bis 9, **dadurch gekennzeichnet, daß** die Temperatur 0 bis 30 °C beträgt.

11. Verfahren nach einem oder mehreren der Ansprüche 1 bis 10, **dadurch gekennzeichnet, daß** die Reaktion unter einem Druck von 0 bis 10 bar durchgeführt wird.

12. Verfahren nach einem oder mehreren der Ansprüche 1 bis 11, **dadurch gekennzeichnet, daß** man den gelben Phosphor in einem Lösungsmittel oder einem Lösungsmittelgemisch suspendiert oder löst und dann mit einem halogenfreien Alkylierungsmittel und mindestens einer Base umsetzt.

13. Verfahren nach einem oder mehreren der Ansprüche 1 bis 12, **dadurch gekennzeichnet, daß** der gelbe Phosphor und das halogenfreie Alkylierungsmittel im molaren Verhältnis von 1:1 bis 1:3 miteinander umgesetzt werden, wobei das molare Verhältnis von gelbem Phosphor zur Base 1:1 bis 1:5 beträgt.

14. Verfahren nach einem oder mehreren der Ansprüche 1 bis 13, **dadurch gekennzeichnet, daß** das nach der Umsetzung erhaltene Zwei-Phasen-System separiert und weiterverarbeitet wird.

15. Verwendung der nach dem Verfahren der Ansprüche 1 bis 14 hergestellten Metallsalze von Alkylphosphonigen Säuren zur Herstellung von Flammschutzmitteln für thermoplastische Polymere wie Polyethylenterephthalat, Polybutylenterephthalat oder Polyamid.

16. Verwendung der nach dem Verfahren der Ansprüche 1 bis 14 hergestellten Metallsalze von Alkylphosphonigen Säuren zur Herstellung von Flammschutzmitteln für duroplastische Harze wie ungesättigte Polyesterharze, Epoxidharze, Polyurethane oder Acrylate.

## Claims

1. A process for the preparation of metal salts of alkylphosphonous acids, which comprises reacting elemental yellow phosphorus with halogen-free alkylating agents in the presence of at least one base.

2. A process as claimed in claim 1, wherein the reaction is carried out in a two-phase system comprising at least one base and an organic solvent.

3. A process as claimed in claim 1 or 2, wherein the alkylating agents are dialkyl sulfates, trialkyl phosphates, dialkyl carbonates and/or formic acid ortho-esters.

4. A process as claimed in one or more of claims 1 to 3, wherein the organic solvents employed are straight-chain or branched alkanes, alkylsubstituted aromatic solvents, water-immiscible or only partially water-miscible alcohols or ethers, alone or in combination with one another.

5. A process as claimed in one or more of claims 1 to 4, wherein the organic solvent employed is toluene, alone or in combination with alcohols.

6. A process as claimed in one or more of claims 1 to 5, wherein the bases are hydroxides, carbonates, bicarbonates, amides, alkoxides and/or amine bases.

7. A process as claimed in one or more of claims 1 to 6, wherein the reaction is carried out in the presence of a phase-transfer catalyst.

8. A process as claimed in claim 7, wherein the phase-transfer catalyst is a tetraalkylphosphonium halide, triphenylalkylphosphonium halide or tetraorganylammonium halide.

9. A process as claimed in one or more of claims 1 to 8, wherein the temperature during the reaction is from -20 to +60°C.

10. A process as claimed in one or more of claims 1 to 9, wherein the temperature is from 0 to 30°C.

11. A process as claimed in one or more of claims 1 to 10, wherein the reaction is carried out at a pressure of from 0 to 10 bar.

12. A process as claimed in one or more of claims 1 to 11, wherein the yellow phosphorus is suspended or dissolved in a solvent or solvent mixture and then reacted with a halogen-free alkylating agent and at least one base.

13. A process as claimed in one or more of claims 1 to 12, wherein the yellow phosphorus and the halogen-free alkylating agent are reacted in a molar ratio of from 1:1 to 1:3, where the molar ratio of yellow phosphorus to base is from 1:1 to 1:5.

14. A process as claimed in one or more of claims 1 to 13, wherein the two-phase system obtained after the reaction is separated and further processed.

15. The use of a metal salt of an alkylphosphonous acid prepared by a process as claimed in claims 1 to 14 for the preparation of flame retardants for thermoplastic polymers, such as polyethylene terephthalate, polybutylene terephthalate or polyamide.

16. The use of a metal salt of an alkylphosphonous acid prepared by a process as claimed in claims 1 to 14 for the preparation of flame retardants for thermosetting resins, such as unsaturated polyester resins, epoxy resins, polyurethanes or acrylates.

## Revendications

1. Procédé pour la préparation de sels métalliques d'acides alkylphosphoniques, **caractérisé en ce qu'**on fait réagir du phosphore élémentaire jaune sur des agents d'alkylation non halogénés en présence d'au moins une base.

2. Procédé selon la revendication 1, **caractérisé en ce qu'**on met en oeuvre la réaction dans un système biphasique constitué par au moins une phase et un solvant organique.

3. Procédé selon la revendication 1 ou 2, **caractérisé en ce qui** concerne les agents d'alkylation, il s'agit de sulfates de dialkyles, de phosphates de trialkyles, de carbonates de dialkyles et/ou d'orthoesters de l'acide formique.

4. Procédé selon une ou plusieurs des revendications 1 à 3, **caractérisé en ce qu'**on utilise en tant que solvants organiques des alcanes linéaires ou ramifiés, des solvants aromatiques substitués par des substituants alkyles, des alcools ou éthers non miscibles ou partiellement miscibles à l'eau, seuls ou en combinaison entre eaux.

5. Procédé selon une ou plusieurs des revendications 1 à 4, **caractérisé en ce qu'**on utilise le toluène en tant que solvant organique, seul ou en mélange avec des alcools.

6. Procédé selon une ou plusieurs des revendications 1 à 5, **caractérisé en ce qu'**il s'agit pour les bases d'hydroxydes, de carbonates, de bicarbonates, d'amides, d'alcoolates et/ou de bases aminées.

7. Procédé selon une ou plusieurs des revendications 1 à 6, **caractérisé en ce que** la réaction est mise en oeuvre en présence d'un catalyseur de transfert de phase.

8. Procédé selon la revendication 7, **caractérisé en ce qui** concerne le catalyseur de transfert de phase, il s'agit d'halogénures de tétraalkylphosphonium, d'halogénures de triphénylalkylphosphonium ou d'halogénures de tétraorganylammonium.

9. Procédé selon une ou plusieurs des revendications 1 à 8, **caractérisé en ce que** la température de la réaction avec le phosphore jaune est de -20 à +60°C.

10. Procédé selon une ou plusieurs des revendications 1 à 9, **caractérisé en ce que** la température de la réaction avec le phosphore jaune est de 0 à 30°C.

11. Procédé selon une ou plusieurs des revendications 1 à 10, **caractérisé en ce que** la réaction est mise en oeuvre sous une pression de 0 à 10 bars.

12. Procédé selon une ou plusieurs des revendications 1 à 11, **caractérisé en ce que** le phosphore jaune est suspendu ou dissous dans un solvant ou un mélange de solvants et ensuite on le fait réagir sur un agent d'alkylation non halogéné et sur au moins une base.

13. Procédé selon une ou plusieurs des revendications 1 à 12, **caractérisé en ce qu'**on utilise le phosphore jaune et l'agent d'alkylation non halogéné dans un rapport molaire de 1:1 à 1:3, le rapport molaire du phosphore jaune à la base est de 1:1 à 1:5.

14. Procédé selon une ou plusieurs des revendications 1 à 13, **caractérisé en ce qu'**on sépare le système biphasique obtenu après la réaction et on parachève son traitement.

15. Utilisation des sels métalliques d'acides alkylphosphoniques préparés selon le procédé des revendications 1 à 14 pour la préparation d'agents ignifugeants pour des polymères thermoplastiques comme le poly(téréphtalate d'éthylène), le poly(téréphtalate de butylène) ou le polyamide.

16. Utilisation des sels métalliques d'acides alkylphosphoniques préparés selon le procédé des revendications 1 à 14 pour la préparation d'agents ignifugeants pour des résines thermodurcissables, telles que des résines polyesters insaturées, des résines époxydes, des polyuréthannes ou acrylates.
